**Europäisches Patentamt**

**European Patent Office**

**Office européen des brevets**

(19)

(11) **EP 1 052 859 A1**

(12) **EUROPÄISCHE PATENTANMELDUNG**

(43) Veröffentlichungstag:
**15.11.2000 Patentblatt 2000/46**

(51) Int Cl.7: **H04Q 3/66**, H04L 12/56,
H04L 12/24, H04Q 3/00,
H04Q 11/04

(21) Anmeldenummer: **99109648.8**

(22) Anmeldetag: **14.05.1999**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(71) Anmelder: **SIEMENS AKTIENGESELLSCHAFT
80333 München (DE)**

(72) Erfinder:
• **Rammer, Josef Dr.
1100 Wien (AT)**

• **Conte, Marco
1120 Wien (AT)**
• **Fischer, Gerhard
1210 Wien (AT)**
• **Bella, Luigi
2202 HZ Noordwijk a/zee (NL)**
• **Chummun, Ferial
2311 gg Leiden (NL)**

(54) **Verfahren zur Bewertung von Übertragungswegen in einem Kommunikationsnetz**

(57) Zur Bewertung von Übertragungswegen U in einem aus Vermittlungsknoten K und Übertragungswegen U bestehenden Kommunikationsnetz KN werden für die Übertragungswege U Linkgesamtbelastungsbewertungen L in Abhängigkeit von der voraussichtlichen Verteilung der durch Verbindungen V in dem Kommunikationsnetz KN verursachten Verkehrslast auf die Übertragungswege U ermittelt. Wird die Erfindung in einem leitungsorientierten Kommunikationsnetz KN verwendet, so ist die Zurückweisungswahrscheinlichkeit von Verbindungen V, die entlang der Route R mit minimalen Routekosten RK aufgebaut wird, minimal.

FIG 1

EP 1 052 859 A1

## Beschreibung

Kommunikationsnetze werden üblicherweise entweder als paketorientierte oder als leitungsorientierte Netze ausgebildet. Hierbei sind paketorientierte Netze eher für die Übermittlung von Informationen ohne Echtzeitcharakter wie z.B. Daten, EMail oder Dateien geeignet, während leitungsorientierte Netze gut auf die Übermittlung von Informationen mit Echtzeitcharakter wie z.B. Sprache oder Bewegtbilder ausgelegt sind. Im Zuge der Konvergenz von leitungs- und paketorientierten Netzen werden jedoch in paketorientierten Netzen zunehmend auch Sprach- und Bewegtbildinformationen übermittelt. Beispiele für paketorientierte Netze sind das Internet oder ATM (= Asynchronous Transfer Modus), wobei die Bezeichnung ATM gelegentlich auch als Synonym für B-ISDN (= Broadband Integrated Services Digital Network) verwendet wird. Am Beispiel von ATM sei die paketorientierte Netztechnologie im weiteren näher erläutert.

Charakteristisch für paketorientierte Netze ist die paketorientierte Übermittlung der Informationen. In ATM-Netzen werden hierbei die Informationen beispielsweise in Pakete gleicher Länge - auch "ATM-Zellen" genannt - aufgeteilt, die einen 5 Bytes umfassenden Zellenkopf (Header) und einen 48 Bytes umfassenden Informationsteil (Payload) aufweisen. Dabei werden die einzelnen Zellen durch die Zellenköpfe bestimmten Informationsströmen - auch "virtuelle Verbindungen" genannt - zugeordnet. Im Gegensatz zu beispielsweise einem leitungsorientierten TDMA-Verfahren, bei welchem Zeitschlitze verschiedenen Typen von Datenverkehr im vorhinein zugeordnet sind, werden die bei einer ATM-Schnittstelle ankommenden Informationsströme in die erwähnten 53-Byte-Zellen segmentiert und anschließend diese Zellen sequentiell in der Reihenfolge, in der sie erzeugt wurden, weiter gesandt. Das bei TDMA zum Einsatz kommende Multiplexverfahren wird auch als "statisches Multiplexing" und das bei ATM zum Einsatz kommende als "statistisches Multiplexing" bezeichnet. In Folge der Flexibilität des statistischen Multiplexing können die Informationsströme bei ATM beliebige Datenraten aufweisen, während bei statischem Multiplexing die Datenrate der einzelnen Informationsströme - auch "Verbindungen" genannt - wegen der festen Zuordnung der Zeitschlitze zu den Informationsströmen festgelegt ist - z.B. auf 64 kbit/s bei ISDN.

In Folge dieses Unterschieds ist in paketorientierten Netzen das Routen einer beantragten Verbindung abhängig von der auf einer Route verfügbaren Restkapazität, während sie in leitungsorientierten Netzen prinzipiell unabhängig von der Auslastung der einzelnen Übertragungswege ist. Beispielsweise kann auf einer Route in einem leitungsorientierten Netz, entlang der z.B. gemäß einem TDM Verfahren 30 Verbindungen in fest zugeordneten Zeitschlitzen mit je 64 kbit/s Kapazität geführt werden können, auch dann in jedem Fall eine weitere Verbindung aufgebaut werden, wenn bereits 29 Verbindungen aufgebaut sind, da die weitere Verbindung wegen ihrer konstanten Datenrate keine höhere Datenrate erfordert als die noch verfügbare Restkapazität von 64 kbit/s. Entlang einer Route in einem paketorientierten Netz mit einer angenommenen Restkapazität von 30 Mbit/s können jedoch lediglich Verbindungen aufgebaut werden, für die eine Datenrate kleiner als 30 Mbit/s beantragt worden ist. Verbindungen mit einer höheren Datenrate werden jedoch zurückgewiesen. Sofern alternative Routen existieren, können sie ersatzweise entlang einer Alternativroute mit ausreichender Restkapazität aufgebaut werden. Zur Ermittlung einer Alternativroute ist jedoch ein erneutes Routen erforderlich.

Es sind verschiedene Routing-Verfahren bekannt, mit denen Routen in Netzen ermittelt werden können. Eine Möglichkeit ist das sog. "Source-Routing", bei dem ausgehend von einem Anfangs-Vermittlungsknoten die komplette Route zu einem Ziel-Vermittlungsknoten ermittelt wird. Für ATM-Netze ist beispielsweise seitens des ATM-Forums im Rahmen der sogenannten in der PNNI(= Private Network-Network Interface)-Spezifikation Source-Routing gefordert. Hierbei wird die Route von dem Anfangs-Vermittlungsknoten ermittelt und anschließend beim Verbindungsaufbau die berechnete Route an die Vermittlungsknoten entlang der Route mit Hilfe der Signalisierung übermittelt. Eine weitere Möglichkeit stellt das sog. "Hop-by-Hop-Routing" dar, bei dem von jedem Vermittlungsknoten entlang einer Route der Rest bzw. das nächste Teilstück der Route neu berechnet wird. Dieses Verfahren kommt beispielsweise im Internet oder in ATM-Netzen ohne Source-Routing zur Anwendung.

Um beim Routen diejenigen Routen auszuscheiden, die überlastete oder unterbrochene Übertragungswege verwenden würden, sind in der PNNI-Spezifikation sog. Flooding-Verfahren vorgeschlagen. Dabei werden von allen Vermittlungsknoten zu definierten Zeitpunkten die Verkehrswerte der an sie angeschlossenen Übertragungswege gemessen und an alle anderen Vermittlungsknoten innerhalb einer Gruppe weitergegeben. Diese Informationsweitergabe wird "Flooding" genannt. Das Flooding kann zusätzlich auch dann veranlaßt werden, wenn sich die Verkehrswerte der Übertragungswege signifikant verändern - z.B. wenn die aktuelle Auslastung eines Übertragungsweges mit einer Gesamtkapazität von 150 Mbit/s um mehr als 10 Mbit/s von der zuletzt weitergegebenen Auslastung abweicht. Beispielsweise sind in ATM-Netzen im Rahmen der PNNI-Spezifikation Verfahren vorgeschlagen, welche einem Routing-Algorithmus die in den Vermittlungsknoten des ATM-Netzes jeweils zuletzt gemessenen Verkehrswerte der direkt an diese angeschlossenen Übertragungswege zur Verfügung stellen. In Zusammenhang mit PNNI sei auch auf U. Gremmelmaier, J. Püschner, M. Winter and P. Jocher, "Performance Evaluation of the PNNI Routing Protocol using an Emulation Tool", ISS 97 XVI World Telecom Congress Proceedings, pp 401 - 408 verwiesen.

Bekannt ist das Routen in leitungsorientierten, öffentlichen Telephonnetzen. Hierbei erfolgt das Routen üblicherweise in mehreren Schritten, da diese Netze aufgrund der meist großen Zahl von Vermittlungsknoten üblicherweise hierarchisch aufgebaut sind. Verbindungen werden in diesen Netzen in einem ersten Schritt von einem Anfangs-Vermittlungsknoten auf einer unteren Hierarchie-Ebene zu einem Vermittlungsknoten auf der obersten Hierarchie-Ebene, anschliessend in einem zweiten Schritt innerhalb der obersten Hierarchie-Ebene zu einem das Verbindungsziel repräsentierenden Vermittlungsknoten und schließlich in einem dritten Schritt bis zum Ziel-Vermittlungsknoten auf einer unteren Hierarchie-Ebene geroutet. Hierbei werden der erste und der dritte Schritt im allgemeinen durch fix eingestellte Routen oder, falls diese z.B. unterbrochen sind, durch fix eingestellte Alternativrouten bewirkt, während der zweite Schritt häufig lediglich die Auswahl des Übertragungsweges zwischen den beiden betroffenen Vermittlungsknoten der obersten Hierarchie-Ebene erfordert, da die Vermittlungsknoten auf der obersten Ebene untereinander beinahe vollständig vermascht sind. Das für leitungsorientierte Telephonnetze standardisierte Signalisierungsverfahren Nr.7 unterstützt jedoch kein Source-Routing, d.h. der Anfangs-Vermittlungsknoten kann eine von ihm berechnete Route nicht weitergeben. Folglich kennen die Vermittlungsknoten entlang der Route auch die bereits zurückgelegte Route nicht, so daß bei Anwendung dieses Routing-Verfahrens in nicht hierarchisch strukturierten bzw. nur teilweise vermaschten Netzen, z.B. dem Internet, in den Routen Schleifen entstehen können.

Für das Routen in leitungsorientierten Netzen ist zudem in K. R. Krishnan, Huebner-Szabo de Bucs, "Admission Control and State-Dependent Routing for Multirate Circuit-Switched Traffic", ITC-15, Seiten 1043-1054, 1997 ein dynamisches Routing-Verfahren offenbart, mit dem für Breitbandnetze die Wahrscheinlichkeit der Belegung von Übertragungswegen berechnet wird. Hierbei wird von einem weitgehend vollständig vermaschten Kommunikationsnetz ausgegangen, was insbesondere in der obersten Hierarchie-Ebene von hierarchisch strukturierten Telephonnetzen üblich ist. Somit ist jeder Übertragungsweg auf der obersten Hierarchie-Ebene bis auf wenige Ausnahmefälle mit Verbindungen belegt, die lediglich einen einzigen Hop von ihrem Start-Vermittlungsknoten auf der obersten Hierarchie-Ebene zu ihrem Ziel-Vermittlungsknoten auf der obersten Hierarchie-Ebene erfordern. Bei der Ermittlung der Belegungswahrscheinlichkeiten der einzelnen Übertragungswege wird für jeden der Übertragungswege der Verkehr betrachtet, der direkt zwischen den beiden Vermittlungsknoten, die mit dem Übertragungsweg verbunden sind, übermittelt wird - im weiteren wird dieser 'direkter Verkehr' genannt. Die Berechnung der Belegungswahrscheinlichkeiten erfolgt mit Hilfe von dynamischer Programmierung und durch Lösung eines linearen Gleichungssystems, wobei die Anzahl der Gleichungen mit zunehmender Kapazität der Übertragungswege ansteigt. Beispielsweise ist für einen Übertragungsweg mit einer Kapazität von 155 Mbit/s und einer kleinsten durchschnittlichen Datenrate von 64 kbit/s die Lösung eines Gleichungssystem mit ca. 2422 Gleichungen erforderlich. Die Berechnungsvorschriften basieren hierbei auf bidirektionalen, symmetrischen Verbindungen.

Der Erfindung liegt die Aufgabe zugrunde, das Routing für Kommunikationsnetze zu verbessern. Die Aufgabe wird durch die Merkmale des Patentanspruchs 1 gelöst.

Der wesentliche Aspekt der Erfindung besteht in einer Bewertung von Übertragungswegen in einem aus Vermittlungsknoten und Übertragungswegen bestehenden, insbesondere paketorientierten, Kommunikationsnetz, bei dem für die Übertragungswege jeweils eine Linkgesamtbelastungsbewertung in Abhängigkeit von der voraussichtlichen Verteilung der durch Informationsübermittlungen in dem Kommunikationsnetz verursachten Verkehrslast auf die Übertragungswege ermittelt werden. Der wesentliche Vorteil der Erfindung ist darin zu sehen, daß die Verteilung der Gesamtverkehrslast in dem Kommunikationsnetzes auf alle Übertragungswege bei der Bewertung eines einzelnen Übertragungswegs berücksichtigt wird. Somit stehen alle Bewertungen miteinander in Beziehung. Insbesondere wird durch die Bewertung eines Übertragungswegs nicht nur dessen Belastung durch direkten Verkehr, sondern auch die Belastung durch indirekten Verkehr wiedergegeben. Indirekter Verkehr ist hierbei dadurch gekennzeichnet, daß er in dem Kommunikationsnetz entlang von indirekten Routen übermittelt wird, z.B. infolge von Überlastungen auf der direkten Route. Besonders vorteilhaft ist diese Bewertung bei schwach vermaschten Netzen, da in diesen Netzen der Anteil von indirektem Verkehr im allgemeinen besonders hoch ist.

Nach einer Ausgestaltung des erfindungsgemäßen Verfahrens ist vorgesehen, daß für die Übertragungswege (U) die voraussichtliche Verteilung repräsentierende, fiktive Verkehrsangebotsraten bestimmt werden - Anspruch 2. Somit können die Bewertungen mit Hilfe von beliebigen, in Abhängigkeit von Verkehrsangebotsraten stehende Bewertungsverfahren erfolgen. Somit wird die verkehrstheoretisch komplexe Berücksichtigung langer, d.h. entlang mehrerer Übertragungswege führender Routen auf einfache Weise bewirkt.

Entsprechend einer Weiterbildung des erfindungsgemäßen Verfahrens weisen die fiktiven Verkehrsangebotsraten zumindest eine gemeinsame Eigenschaft auf - Anspruch 3. Hierdurch wird die Verteilung der Gesamtverkehrslast vorteilhaft berücksichtigt.

Gemäß einer Ausgestaltung des erfindungsgemäßen Verfahrens ist vorgesehen, daß die gemeinsame Eigenschaft als identische Steigung der Blockierungsraten in Abhaengigkeit von den fiktiven Verkehrsangebotsraten ausgebildet ist - Anspruch 4. Durch Anwendung dieser Optimierungsstrategie wird die Verteilung der Gesamtverkehrslast näherungsweise optimal berücksichtigt.

Nach einer weiteren Ausgestaltung des erfindungsgemäßen Verfahrens entspricht die identische Steigung der Steigung einer gegebenen Blockierungsrate eines fiktiven Übertragungswegs, wobei die Verkehrsangebotsrate (AFH) dieses fiktiven Übertragungswegs zumindest die gemeinsame Eigenschaft aufweist - Anspruch 5. Hierdurch wird vorteilhaft eine für die Berücksichtigung der Verteilung der Gesamtverkehrslast besonders geeignete Steigung bei der Bildung der fiktiven Verkehrslasten herangezogen.

Entsprechend einer Variante des erfindungsgemäßen Verfahrens ist vorgesehen, daß der fiktive Übertragungsweg durch eine fiktive maximale Kapazität (MaxCR$_F$) gekennzeichnet ist, die einen Durchschnitt der maximalen Kapazitäten (MaxCR) der Übertragungswege (U) repräsentiert - Anspruch 6. Somit fließt die häufig unterschiedliche Charakteristik der einzelnen Übertragungswege selbst vorteilhaft in die Ermittlung der Linkgesamtbelastungen mit ein.

Gemäß einer Weiterbildung des erfindungsgemäßen Verfahrens sind die Informationsübermittlungen unterschiedlichen Verkehrsklassen zugeordnet - Anspruch 7. Somit paßt die Erfindung besonders gut zu paketorientierten Netzen, z.B. ATM-Netzen oder dem Internet, in denen unterschiedliche Verkehrsklassen mit z.B. unterschiedlichen Datenraten vorgesehen sind.

Nach einer Ausgestaltung des erfindungsgemäßen Verfahrens ist vorgesehen, daß alle Verkehrsangebote einen für das gesamte Kommunikationsnetz (KN) typischen Verkehrsmix VM von Informationsübermittlungen unterschiedlicher Verkehrsklassen aufweisen - Anspruch 8. Durch die Annahme, daß alle Übertragungswege den gleichen typischen Verkehrsmix VM aufweisen, wird vorteilhaft eine weitere gemeinsame Eigenschaft berücksichtigt, wodurch die Verteilung der Gesamtlast besser erfaßt wird.

Entsprechend einer weiteren Ausgestaltung des erfindungsgemäßen Verfahrens wird der typische Verkehrsmix VM zumindest durch die Anforderungswahrscheinlichkeit jeder der Verkehrsklassen in dem gesamten Kommunikationsnetz (KN) bestimmt - Anspruch 9. Somit wird der tatsächliche Verkehrsmix VM in dem Kommunikationsnetz auf einfache Weise näherungsweise bestimmt.

Gemäß einer Verwendung des erfindungsgemäßen Verfahrens ist vorgesehen, daß in einem Verfahren zum Aufbau einer Verbindung zur Informationsübermittlung in einem aus Vermittlungsknoten und Übertragungswegen bestehenden verbindungsorientierten Kommunikationsnetz für die Informationsübermittlung mehrere Routen geeignet sind, aus diesen eine optimale Route in Abhängigkeit von den Linkgesamtbelastungsbewertungen ausgewählt wird, und die Verbindung entlang der optimalen Route aufgebaut wird - Anspruch 10. Bei Aufbau von Verbindungen entlang einer derart bewerteten und ausgewählten Route wird infolge der ausgewogenen Linkgesamtbelastungsbewertungen die Zurückweisungswahrscheinlichkeit und somit der Signalisierungsaufwand und die Häufigkeit der Ermittlung von Ersatzrouten gesenkt. Zudem wird die Anzahl der zu bewertenden Routen und folglich die Bearbeitungszeit für die Bewertung der Routen vorteilhaft reduziert, da lediglich die geeigneten Routen bewertet werden. Insbesondere kommt die Erfindung in zeitgemäßen ATM-Netzen zum Einsatz.

Das erfindungsgemäße Verfahren wird im folgenden anhand von mehreren Figuren näher erläutert. Dabei zeigt

Figur 1    in einem Blockschaltbild ein Kommunikationsnetz mit Vermittlungsknoten und Übertragungswegen,

Figur 2    in einer Tabelle alle Routen, die von dem Vermittlungsknoten $K_1$ zu den übrigen Vermittlungsknoten des in Figur 1 dargestellten Kommunikationsnetzes ausgehen,

Figur 3a    in einem Diagramm den Verlauf einer Linkbewertungsfunktion

Figur 3b    in einer Tabelle Linkgesamtbelastungsbewertungen in Abhängigkeit von der Linkbewertungsfunktion und

Figur 3c    in einer Tabelle eine Bewertung der in Figur 2 aufgeführten Routen in Abhängigkeit von den Linkbewertungen.

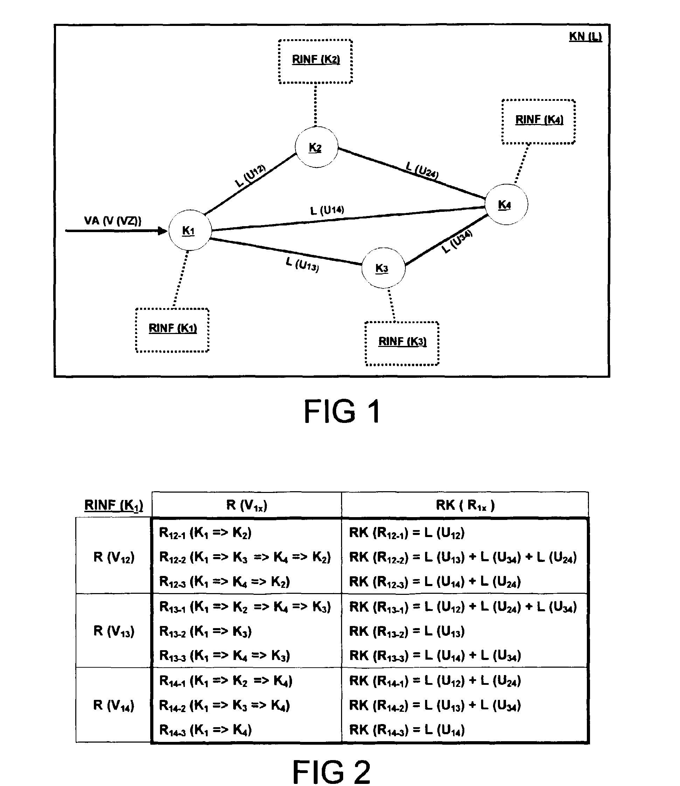

In Figur 1 ist ein Kommunikationsnetz KN mit vier Vermittlungsknoten $K_i$, 1 <= i <= 4 dargestellt. Der Vermittlungsknoten $K_1$ ist mit dem Vermittlungsknoten $K_2$ durch einen Übertragungsweg $U_{12}$ und mit dem Vermittlungsknoten $K_3$ durch einen Übertragungsweg $U_{13}$ verbunden; Der Vermittlungsknoten $K_4$ ist mit dem Vermittlungsknoten $K_2$ durch einen Übertragungsweg $U_{24}$ und mit dem Vermittlungsknoten $K_3$ durch einen Übertragungsweg $U_{34}$ verbunden; zwischen den Vermittlungsknoten $K_1$ und $K_4$ ist zudem ein Übertragungsweg $U_{14}$ vorgesehen, der in der Zeichnung gepunktet dargestellt ist. Hierdurch sei angedeutet, daß Übertragungswege U - beispielsweise der Übertragungsweg $U_{14}$ - temporär überlastet und/oder unterbrochen sein können. Jedem der Vermittlungsknoten $K_i$ sind Routinginformationen RINF ($K_i$) zugeordnet. Durch einen dem Vermittlungsknoten $K_1$ zugeführten Pfeil wird zudem angedeutet, daß diesem Vermittlungsknoten $K_1$ eine Anforderung VA für eine Informationsübermittlung zu einem Informationsübermittlungsziel VZ - beispielsweise dem Vermittlungsknoten $K_4$ - übermittelt wird. In einem verbindungsorientierten Kommunikationsnetz KN wird hierzu beispielsweise infolge der Anforderung VA der Aufbau einer Verbindung V angefordert.

In Figur 2 ist die dem Vermittlungsknoten $K_1$ zugeordnete Routinginformation RINF ($K_1$) dargestellt. Sie enthält beispielsweise die von dem Vermittlungsknoten $K_1$ zu den Vermittlungsknoten $K_j$, 2 <= j <= 4 führenden Routen $R_{1j}$

sowie deren Routekosten RK ($R_{1j}$). Die Routen $R_{1j}$ sind hierbei als eine von gegebenenfalls mehreren unterschiedlichen Möglichkeiten definiert, von dem Vermittlungsknoten $K_1$ unter Einbeziehung der Vermittlungsknoten $K_j$, $2 <= j <= 4$ und der Übertragungswege U zu dem Vermittlungsziel VZ - im Beispiel dem Vermittlungsknoten $K_4$ - zu gelangen. Im Beispiel führen unter Einbeziehung des Übertragungsweges $U_{14}$ jeweils drei Routen $R_{1j-k}$, $1 <= k <= 3$ von dem Vermittlungsknoten $K_1$ zu den Vermittlungsknoten $K_j$, und zwar ausgehend von dem Vermittlungsknoten $K_1$ die Route $R_{12-1}$ direkt, die Route $R_{12-2}$ über die Vermittlungsknoten $K_3$ und $K_4$ und die Route $R_{12-3}$ über den Vermittlungsknoten $K_4$ zu dem Vermittlungsknoten $K_2$; die Route $R_{13-1}$ über die Vermittlungsknoten $K_2$ und $K_4$, die Route $R_{13-2}$ direkt und die Route $R_{13-3}$ über den Vermittlungsknoten $K_4$ zu dem Vermittlungsknoten $K_3$; die Route $R_{14-1}$ über den Vermittlungsknoten $K_2$, die Route $R_{14-2}$ über den Vermittlungsknoten $K_3$ und die Route $R_{14-2}$ direkt zu dem Vermittlungsknoten $K_4$. Die Routekosten RK ($R_{1j-k}$) der Routen $R_{1j-k}$ ergeben sich jeweils aus der Summe der Linkgesamtbelastungsbewertungen L der jeweils von den Routen verwendeten Übertragungswege U. In diesem Beispiel wird aus Gründen der Einfachheit angenommen, daß alle Übertragungswege U bi-direktional und die Linkgesamtbelastungsbewertungen L unabhängig von der Richtung der Informationsübermittlung sind. Im Falle einer differenzierteren Sichtweise mit uni-direktionalen Übertragungswegen U würden zwei Vermittlungsknoten $K_i$, $K_j$ ggf. durch zwei Übertragungswege $U_{ij}$, $U_{ji}$ verbunden, denen jeweils individuelle Linkgesamtbelastungsbewertungen $L_{ij}$, $L_{ji}$ in Abhängigkeit von der Übertragungsrichtung zugewiesen würden. Die Routenkosten RK einer bi-direktionalen Route R wären in diesem Fall beispielsweise die Summe der Routenkosten RK für die uni-direktionale Hinund die uni-direktionale Rückrichtung der Route R, vermindert um einen Korrekturterm. Der Korrekturterm berücksichtigt, dass ein gewisser Anteil der Routekosten durch das Summieren doppelt gezählt wird.

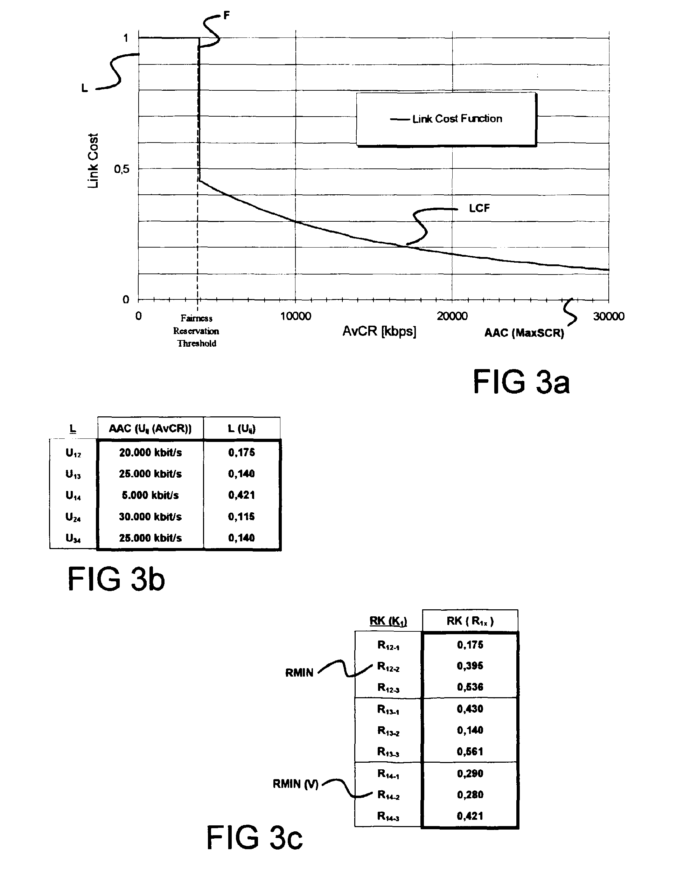

In Figur 3a ist in einem Diagramm der Verlauf einer Linkbewertungsfunktion LCF dargestellt, die für einen Übertragungsweg U mit einer Kapazität MaxCR in Abhängigkeit von dessen aktueller Auslastung AAC Linkgesamtbelastungsbewertungen L ergibt, wobei diese in Abhängigkeit von einem erfindungsgemäß ermittelten fiktiven Verkehrsangebot VA und der Kapazität MaxCR des zugehörigen Übertragungswegs U gebildet sind. Das fiktive Verkehrsangebot VA hängt seinerseits von einer erfindungsgemäß ermittelten Verkehrsangebotsrate $\lambda$ sowie einem für das Kommunikationsnetz KN typischen Verkehrsmix VM von Verkehrsklassen VK ab. Auf der Abszisse des Diagramms - auch 'x-Achse' genannt - sind die aktuell verfügbaren Zellraten AvCR des entsprechenden Übertragungswegs U, und auf der Ordinate - auch 'y-Achse' genannt - für jede verfügbare Zellrate AvCR die zugehörige Linkgesamtbelastungsbewertung L - in Figur 3a auch 'link cost' genannt - aufgetragen. Die Auslastung AAC - auch Linkbelegung genannt - kann mithilfe der aktuell verfügbare Zellrate AvCR, der Kapazität MaxCR, und einer Fairness Reservation Threshold F wie folgt ausgedrückt werden: AAC=MaxCR-F-AvCR. Die Linkbewertungsfunktion LCF ist durch eine beliebige Berechungsvorschrift bestimmt, z.B. durch das eingangs beschriebene Multirate Gleichungssystem nach Krishnan.

In Figur 3b ist dargestellt, wie für gegebene Auslastungen AAC der Übertragungswege U Linkgesamtbelastungsbewertungen L in Abhängigkeit von der Linkbewertungsfunktionen LCF gebildet werden. Hierbei werden die Auslastungen AAC als noch verfügbare Zellraten AvCR in kbit/s angegeben. In diesem Beispiel wird angenommen, dass alle Übertragungswege vom selben Übertragungswegtyp sind, dessen Linkgesamtbelastungsbewertungen durch Figur 3a gegeben sind. Beispielsweise seien entsprechend Figur 3a für die Übertragungswege $U_{ij}$, $ij = 12, 13, 14, 24, 34$ die noch verfügbaren Zellraten AvCR ($U_{12}$) = 20.000 kbit/s, AvCR ($U_{13}$) = 25.000 kbit/s, AvCR ($U_{14}$) = 5.000 kbit/s, AvCR ($U_{24}$) = 30.000 kbit/s und AvCR ($U_{34}$) = 25.000 kbit/s. Hierfür ergeben sich gemäß der Linkbewertungsfunktion LCF die Linkgesamtbelastungsbewertungen L ($U_{12}$) = 0,175, L ($U_{13}$) = 0,140, L ($U_{14}$) = 0,421, L ($U_{24}$) = 0,115 sowie L ($U_{34}$) = 0,140.

In Figur 3c sind die Routekosten RK der in Figur 2 aufgeführten Routen $R_{1j-k}$ aufgelistet, die entsprechend der in Figur 2 für die Ermittlung der Routekosten RK angegebenen Formel auf Basis der in Figur 3b angegebenen Linkgesamtbelastungsbewertungen L ermittelt worden sind. Die Route $R_{13-2}$ ist hierbei die optimale Route RMIN mit den geringsten Routenkosten RK (0,140) aller Routen R. Für die angeforderte Informationsübermittlung vom Vermittlungsknoten $K_1$ zum Vermittlungsknoten $K_4$ ist die Route $R_{14-2}$ die für diese Verbindung V optimale Route RMIN (V). Diese weist beim Aufbau der Verbindung V entlang dieser Route in Zukunft für alle weiteren Verbindungen V entsprechend den vorausgesetzten Verkehrs- und Verkehrslastverteilungsprofilen in dem Kommunikationsnetz KN die geringste Zurückweisungswahrscheinlichkeit auf. Es sei darauf hingewiesen, daß sowohl die Route $R_{14-1}$ als auch die Route $R_{14-2}$ geringere Routekosten RK aufweisen als die Route $R_{14-3}$, die das Verbindungsziel VZ über einen Vermittlungsknoten K weniger erreicht als die Routen $R_{14-1}$ und $R_{14-2}$, d.h. die Anzahl der Übertragungswege U pro Route R fließt zwar in die Bewertung der Routen R ein, indem bei Routen R mit vielen Vermittlungsknoten K - in der Fachwelt auch "Hops" genannt - eine Mehrzahl von Linkgesamtbelastungsbewertungen L addiert wird. Sofern diese Linkgesamtbelastungsbewertungen L jedoch deutlich niedriger sind als diejenigen entlang der Route R mit der geringsten Anzahl von Vermittlungsknoten K, z.B. infolge einer niedrigen Auslastung AAC der zugehörigen Übertragungswege U, wird ggf. eine Route R mit einer vergleichsweise größeren Anzahl Hops bevorzugt, sofern damit die Zurückweisungswahrscheinlichkeit minimiert wird.

Für das Ausführungsbeispiel sei beispielsweise ein verbindungsorientiertes Kommunikationsnetz KN mit vier Übertragungswegen $U_{12}$, $U_{13}$, $U_{24}$ und $U_{34}$ betrachtet, d.h. die Informationsübermittlungen erfolgen jeweils entlang von Verbindungen V. Die Kapazitäten MaxCR der Übertragungswege seien als $MaxCR_{12}$ = 80 Mbit/s, $MaxCR_{13}$ = $MaxCR_{24}$ = 100 Mbit/s und $MaxCR_{34}$ = 120 Mbit/s definiert. Weiter sei angenommen, daß die Informationsübermittlungen zwei unterschiedlichen Verkehrsklassen zugeordnet werden, wobei die Kapazitätsanforderungen für die erste Verkehrsklasse 5 Mbit/s und für die zweite Verkehrsklasse 10 Mbit/s sei. Die Verbindungen seien beispielsweise als Constant Bitrate Verbindungen V ausgebildet. Die mittlere Verbindungsdauer sei für beide Verkehrsklassen 100 s. Auf allen Übertragungswegen soll eine Fairness-Reservation Threshold F gleich 10 Mbit/s zum Einsatz kommen.

In einem ersten Schritt wird für dieses Kommunikationsnetz KN ein typischer Verkehrsmix bestimmt, beispielsweise durch Erstellung eines normierten Gesamtverbindungsanforderungshistogramm:

| Verkehrsklasse (Kapazitätsanforderung) | Wahrscheinlichkeit |
|---|---|
| 1 (5 Mbit/s) | **0.5** |
| 2 (10 Mbit/s) | **0.5** |

In einem zweiten Schritt wird für einen fiktiven, für das Kommunikationsnetz KN durchschnittlichen Übertragungsweg $U_D$ dessen Kapazität $MaxCR_D$ ermittelt, z.B. indem der Durchschnitt der Kapazitäten MaxCR der Übertragungswege U gebildet wird. Im gewählten Beispiel ist diese Kapazität $MaxCR_D$ = $[MaxCR_{12} + MaxCR_{13} + MaxCRU_{24} + MaxCR_{34}]$ / 4 = [80 Mbit/s + 100 Mbit/s + 100 Mbit/s + 120 Mbit/s] / 4 = 100 Mbit/s. Für diesen durchschnittlichen Übertragungsweg $U_D$ wird eine beliebige theoretische Blockierungswahrscheinlichkeit $BW_D$ angenommen - beispielsweise 0.07 - und hieraus eine Verkehrsangebot VA mit einer Verkehrsangebotsrate $\lambda_D$ ermittelt, für die sich die Blockierungswahrscheinlichkeit $BW_D$ ergibt. Die Verkehrsangebotsrate $\lambda$ repräsentiert hierbei die Häufigkeit der Anforderungen von Informationsübermittlungen. Unabhängig von der Änderung der Verkehrsangebotsrate $\lambda$ bleibt für jedes Verkehrsangebot VA der typische Verkehrsmix konstant. Die Blokkierungswahrscheinlichkeit $BW(\lambda)$ eines beliebigen Übertragungsweges U mit einer Kapazität MaxCR wird beispielsweise aus einer Auslastungsfunktion P(n, $\lambda$; MaxCR) bestimmt. Unter Berücksichtigung der Fairness Reservation Threshold F ergibt sich die Blockierungswahrscheinlichkeit BW hierbei wie folgt:

$$BW(\lambda) = \sum_{n=MaxCR-\atop F+1}^{MaxCR} P(n, \lambda; MaxCR)$$

Die Auslastungsfunktion P(n, $\lambda$; MaxCR) kann beispielsweise mittels eines rekursiven Verfahrens berechnet werden. Ein Verfahren dieser Art ist z.B. in J. S. Kaufman, "Blocking in a Shared Resource Environment", IEEE Transaction on Communications, COM-29, Nr.10, pp. 1474-1481, October 1981 offenbart. Für die angenommene Blockierungswahrscheinlichkeit $BW_D$ wird, z.B. mittels eines iterativen Verfahrens, die gesuchte Verkehrsangebotsrate $\lambda_D$ bestimmt, für die gilt $BW(\lambda)=BW_D$. Für den durchschnittlichen Übertragungsweg $U_D$ wird somit eine Verkehrsangebotsrate $\lambda_D$ von 0.12 Anforderungen/s ermittelt. Hieraus ergibt sich durch Multiplikation mit der Blockierungswahrscheinlichkeit $BW_D$ eine Blockierungsrate $BR_D$ von 0,0084 Anforderungen/s, d.h. der mittlere zeitliche Abstand zwischen Blockierungen auf diesem Übertragungsweg $U_D$ beträgt im Durchschnitt ca. 120 Sekunden.

In einem dritten Schritt wird die Steigung $BR'_D$ der Blockierungsrate $BR_D$ des durchschnittlichen Übertragungsweges $U_D$ für die Verkehrsangebotsrate $\lambda_D$ bestimmt, beispielsweise durch numerische Differentiation der Blockierungsrate $BR_D(\lambda)$ = $\lambda.BW(\lambda)$ nach der Verkehrsangebotsrate $\lambda$ an der Stelle $\lambda_D$. Im Beispiel ergibt sich hierbei als Steigung $BR'_D$ der Blockierungsrate $BR_D$ 0.33.

In einem vierten Schritt werden für die Übertragungswege U fiktive Verkehrsangebotsraten $\lambda$ ermittelt mit der Maßgabe, daß für die Steigungen BR' der jeweiligen Blockierungsraten BR gilt: BR' = $BR'_D$, = 0.33. Das Gleichsetzen der Steigungen BR' der Blockierungsraten BR auf allen Übertragungswegen U bewirkt vorteilhaft, daß die gegebene Gesamtverkehrslast im Kommunikationsnetz KN so auf die Übertragungswege U verteilt wird, daß die Gesamtblockierungsrate im Kommunikationsnetz KN minimiert wird. Die Erfindung, zur Minimierung der Gesamtblockierungsrate für alle fiktive Verkehrsangebotsraten $\lambda$ identische Steigungen BR' der zugehörigen Blockierungsraten BR zu wählen - die vorzugsweise der Steigung $BR'_D$ entspricht, aber auch jede beliebige Steigung BR' sein könnte - wird durch folgende Überlegungen begründet: Unter der Annahme, daß durch alternatives Routen die Verbindungswege im Mittel nicht signifikant verlängert werden, welche in Kommunikationsnetz KN mit mittlerer Vermaschung gut erfüllt ist, wird die angestrebte Minimierung der Gesamtblockierungsrate als Optimierungsproblem formuliert:

    minimiere

$$\sum_{i=1}^{K} BR_i(\lambda_i),$$

(*i* läuft über alle Übertragungswege 1 bis *K* im Netz)
unter der Nebenbedingung :

$$\sum_{i=1}^{K} \lambda_i = c = const.$$

Beispielsweise wird dieses Optimierungsproblem mit Hilfe einer Lagrangefunktion gelöst. Die zu diesem Problem gehörige Lagrangefunktion lautet:

$$L(\lambda_1,...,\lambda_K,u) = \sum_{i=1}^{K} BR_i(\lambda_i) + u\left(\sum_{i=1}^{K} \lambda_i - c\right),$$

wobei *u* der Lagrange-Multiplikator ist. Die Methode der Lagrange-Multiplikatoren ergibt die folgenden *K* Gleichungen:

$$\frac{\partial}{\partial \lambda_j} L(\lambda_1,...,\lambda_K,u) = BR_j'(\lambda_j) + u = 0 \ (j = 1,...,K)$$

Daraus folgt:

$$BR_j'(\lambda_j) = -u \ (j = 1,...,K),$$

was dahingehend interpretiert wird, daß die Steigungen *BR'* aller Übertragungswege U gleich sein sollten.

Die Steigung BR' der Blockierungsrate BR wird z.B. durch numerische Differentiation der Blockierungsrate $BR(\lambda) = \lambda \cdot BW(\lambda)$ ermittelt. Beispielsweise wird mittels eines iterativen Verfahrens eine Verkehrangebotsrate $\lambda_0$ so bestimmt, daß gilt:

$$\left.\frac{d}{d\lambda} BR(\lambda)\right|_{\lambda_0} = BR' \ .$$

Hierbei wird BR' jeweils gleich 0,33 gewählt. Die dabei bestimmten Verkehrangebotsraten $\lambda_0$ werden gleich den gesuchten fiktiven Verkehrangebotsraten $\lambda$ gesetzt. Für den Übertragungsweg $U_{12}$ wird hierdurch eine Verkehrsangebotsrate $\lambda_{12}$ von 0.09 Anforderungen/s bestimmt, was für den Übertragungsweg $U_{12}$ mit seiner Kapazität von 80 Mbit/s einer theoretischen Blockierungswahrscheinlichkeit $BW_{12}$ von 0.08 entspricht. Hieraus ergibt sich durch Multiplikation mit der Blockierungswahrscheinlichkeit $BW_{12}$ mit der Verkehrsangebotsrate $\lambda_{12}$ eine Blockierungsrate $BR_{12}$ von 0,0072 Anforderungen/s, d.h., der mittlere Abstand zwischen Blockierungen auf diesem Übertragungsweg $U_{12}$ beträgt im Durchschnitt ca. 139 Sekunden. Auf analoge Weise wird für den Übertragungsweg $U_{34}$ eine Verkehrsangebotsrate $\lambda_{34}$ von 0.15 Anforderungen/s bestimmt, was für den Übertragungsweg $U_{34}$ mit seiner Kapazität von 120 Mbit/s einer theoretischen Blockierungswahrscheinlichkeit $BW_{34}$ von 0.06 entspricht. Die Blockierungsrate $BR_{34}$ ist 0,009 Anforderungen/s, d.h., der mittlere Abstand zwischen Blockierungen auf diesem Übertragungsweg $U_{34}$ beträgt im Durchschnitt ca. 111 Sekunden. Für die Übertragungswege $U_{13}$ und $U_{24}$ ergeben sich die gleichen Werte wie für den durchschnittlichen Übertragungsweg $U_D$, da alle die gleiche Kapazität MaxCR = 100 Mbit/s aufweisen. Zusammenfassend gelten somit für die unterschiedlichen fiktiven Verkehrsangebote VA folgende Werte:

| VA | U | MaxCR | $\lambda$ | BW | BR | BR' | Mittlerer Abstand zwischen Zurückweisungen |
|---|---|---|---|---|---|---|---|
| $VA_D$ | $U_D$ | 100 | 0.12 | 0.07 | 0.0084 | 0.33 | 120 |

(fortgesetzt)

| VA | U | MaxCR | λ | BW | BR | BR' | Mittlerer Abstand zwischen Zurückweisungen |
|---|---|---|---|---|---|---|---|
| $VA_{12}$ | $U_{12}$ | 80 | **0.09** | 0.08 | 0.0072 | **0.33** | 139 |
| $VA_{13}$ | $U_{13}$ | 100 | **0.12** | 0.07 | 0.0084 | **0.33** | 120 |
| $VA_{24}$ | $U_{24}$ | 100 | **0.12** | 0.07 | 0.0084 | **0.33** | 120 |
| $VA_{34}$ | $U_{34}$ | 120 | **0.15** | 0.06 | 0.0090 | **0.33** | 111 |

Somit werden für die Übertragungswege U in Abhängigkeit von zumindest ihrer Kapazität MaxCR unterschiedliche fiktive Verkehrsangebote VA bestimmt, die durch unterschiedliche fiktive Verkehrsangebotsraten λ gekennzeichnet sind. Diese werden anstelle von tatsächlichen, z.B. durch Messungen ermittelte Verkehrsangebote für die Bewertung der Übertragungswege U herangezogen.

In einem fünften Schritt werden die berechneten fiktiven Verkehrsangebotsraten λ der fiktiven Verkehrsangebote VA aller Übertragungswege U zur Ermittlung der Linkgesamtbelastungsbewertung L, beispielsweise mit Hilfe der der Linkbewertungsfunktion LCF, verwendet. Dies erfolgt beispielsweile mit Hilfe des eingangs bereits genannten Multirate-Gleichungssystems nach Krishnan. Hierbei ergeben sich für jeden der Übertragungswege U Linkgesamtbelastungsbewertungen in Abhängigkeit von ihrer jeweiligen Auslastung AAC. Somit ist die Erfindung gut in Kommunikationsnetzen KN mit Flooding-Verfahren zu verwenden, in denen die Auslastungen AAC der Übertragungswege U z. B. zyklisch ermittelt und anschließend allen Vermittlungsknoten K mitgeteilt werden. Sofern hierbei ein Übertragungsweg U unterbrochen oder überlastet ist, wird dies z.B. dadurch berücksichtigt, daß diesem Übertragungsweg U für die Dauer der Überlastung oder Unterbrechung im Vergleich zu den Linkgesamtbelastungsbewertungen L der nicht überlasteten oder unterbrochenen Übertragungswege U eine sehr hohe Linkgesamtbelastungsbewertung zugewiesen wird.

Besonders schöne Vorteile ergeben sich bei Verwendung der Erfindung in einem Verfahren zum Aufbau einer Verbindung in einer verbindungsorientierten Kommunikationsnetz KN mit Source-Routing. Zur Erläuterung sei vereinfacht angenommen, daß die Übertragungswege alle eine identische Kapazität MaxCR aufweisen, womit sich für alle ein identisches fiktives Verkehrsangebot VA und lediglich eine Linkbewertungsfunktion LCF ergibt. Zudem sei der optionale Übertragungsweg $U_{14}$ berücksichtigt. Beispielsweise sei von dem Vermittlungsknoten $K_1$ durch die Anforderung VA der Aufbau einer Verbindung V zu dem Verbindungsziel VZ angefordert. Dieses Verbindungsziel VZ sei als der Vermittlungsknoten $K_4$, die Verbindung V somit als Verbindung $V_{14}$ ausgebildet. Zur Einschränkung des Suchraums werden von dem Vermittlungsknoten $K_1$ lediglich die für diese Verbindung $V_{14}$ relevanten Routen R ($V_{14}$) bewertet, d. h. die Routen $R_{14\text{-}1}$, $R_{14\text{-}2}$ und $R_{14\text{-}3}$. Die Auswahl einer der relevanten Routen R ($V_{14}$) erfolgt unter Verwendung der erfindungsgemäß bestimmten Linkgesamtbelastungsbewertungen, beispielsweise indem mit Hilfe eines Dijkstra-Algorithmus eine für die Verbindung V optimale Route RMIN ($V_{14}$) mit minimalen Routekosten RK bestimmt wird, d.h. im vorliegenden Beispiel die Route $R_{14\text{-}2}$. Somit wird die Verbindung V entlang der Route $R_{14\text{-}2}$ mit 2 Hops und nicht entlang der Route $R_{14\text{-}3}$ mit einem Hop aufgebaut, d.h. die Tatsache, daß die Route $R_{14\text{-}2}$ schwächer ausgelastet ist als die Route $R_{14\text{-}3}$ fließt stärker in die Bewertung ein als die Tatsache, daß durch die größere Anzahl Hops eine geringfügig erhöhte Verzögerungszeit bewirkt wird. Zudem wird infolge des Source-Routings die optimale Route RMIN aus Sicht des gesamten Kommunikationsnetzes KN bestimmt, d.h. eine Route R wird anfangs entlang von ggf. im Vergleich zu anderen Übertragungswegen U stärker belasteten Übertragungswegen U aufgebaut, sofern hierdurch im weiteren Verlauf der Route R besonders "günstige" Übertragungswege erreicht werden. Im Anschluß an das Routen wird die angeforderte Verbindung $V_{14}$ entlang der optimalen Route RMIN aufgebaut.

Es sei darauf hingewiesen, daß die Erfindung natürlich auf beliebige Kommunikationsnetze KN, insbesondere verbindungslose Kommunikationsnetze KN wie z.B. das paketorientierte Internet anwendbar ist. Im Internet wird beispielsweise jedes einzelne Paket entlang einer paketindividuellen Route R übermittelt, d.h. die Route jedes Paketes einer virtuellen Verbindung V ist unabhängig von den Routen R der Vorgänger- und Nachfolger-Paketen derselben virtuellen Verbindung V; die Vermittlungsknoten K, die beispielsweise als Internet Router ausgebildet sind, ermitteln hierbei für jedes Paket einer virtuellen Verbindung V jeweils den nächsten Vermittlungsknoten K - in der Fachwelt auch als "Hop" bezeichnet. Von jedem Router werden gemäß dem erfindungsgemäßen Verfahren die an ihn angeschlossenen Übertragungswege U bewertet. In Abhängigkeit von dieser Bewertung werden ggf. aufeinanderfolgende, zur selben virtuellen Verbindung V gehörende Pakete entsprechend den ermittelten Linkgesamtbelastungsbewertungen L auf die Übertragungswege U verteilt. Hierbei kann es z.B. durch unterschiedliche Laufzeiten der einzelnen Pakete zu Änderungen der ursprünglichen Reihenfolge der Pakete kommen. In diesem Fall wird im Empfänger die ursprüngliche Reihenfolge der Pakete der virtuellen Verbindung V durch eine höhere Protokollschicht wiederhergestellt. Hierfür sind mehrere Verfahren bekannt, z.B. das Transport Control Protocol TCP.

Beim Routen in Netzen mit Flooding-Verfahren - beispielsweise ATM-Netzen mit PNNI-Verfahren oder IP-Netzen mit OSPF-Verfahren - ist die Verwendung der Erfindung besonders vorteilhaft. Hierbei erfolgt z.B. nach jedem Flooding in den Vermittlungsknoten K eine Neubewertung der Übertragungswege U. Hierzu werden mit Hilfe der Linkbewertungsfunktionen LCF für die Übertragungswege U neue Linkgesamtbelastungsbewertungen L in Abhängigkeit von den mit dem Flooding mitgeteilten Auslastungen AAC bestimmt. Anschließend erfolgen die Informationsübermittlungen in Abhängigkeit von den neu bestimmten Linkgesamtbelastungsbewertungen L. Der Aufwand für Routen wird hierbei vorteilhaft weiter gesenkt, sofern überlastete und/oder unterbrochene Übertragungswege U zumindest während des Zeitraums der Überlastung und/oder Unterbrechung mit unendlich hohen Linkgesamtbelastungsbewertungen L bewertet werden, womit sie für das Routen ausscheiden.

**Patentansprüche**

1. Verfahren zur Bewertung von Übertragungswegen (U) in einem aus Vermittlungsknoten (K) und Übertragungswegen (U) bestehenden Kommunikationsnetz (KN),
   bei dem
   für die Übertragungswege (U) jeweils eine Linkgesamtbelastungsbewertung (L) in Abhängigkeit von der voraussichtlichen Verteilung der durch Informationsübermittlungen in dem Kommunikationsnetz (KN) verursachten Gesamtverkehrslast auf die Übertragungswege (U) ermittelt wird.

2. Verfahren nach Anspruch 1,
   **dadurch gekennzeichnet,**
   daß für die Übertragungswege (U) die voraussichtliche Verteilung repräsentierende, fiktive Verkehrsangebote (VA) bestimmt werden.

3. Verfahren nach Anspruch 2,
   **dadurch gekennzeichnet,**
   daß die fiktiven Verkehrsangebote (VA) zumindest eine gemeinsame Eigenschaft aufweisen.

4. Verfahren nach Anspruch 3,
   **dadurch gekennzeichnet,**
   daß die gemeinsame Eigenschaft als identische Steigung der Blockierungsraten in Abhängigkeit von den Verkehrsangebotsraten (λ) der fiktiven Verkehrsangebote (VA) ausgebildet ist.

5. Verfahren nach Anspruch 4,
   **dadurch gekennzeichnet,**
   daß die identische Steigung der Steigung einer gegebenen Blockierungsrate eines durchschnittlichen Übertragungswegs (U) entspricht, wobei das Verkehrsangebot (VA) dieses durchschnittlichen Übertragungswegs (U) zumindest die gemeinsame Eigenschaft aufweist.

6. Verfahren nach Anspruch 5,
   **dadurch gekennzeichnet,**
   daß der durchschnittliche Übertragungsweg (U) durch eine durchschnittliche Kapazität (MaxCR) gekennzeichnet ist, die einen Durchschnitt der Kapazitäten (MaxCR) der Übertragungswege (U) repräsentiert.

7. Verfahren nach einem der vorhergehenden Ansprüche,
   **dadurch gekennzeichnet,**
   daß die Informationsübermittlungen unterschiedlichen Verkehrsklassen (VK) zugeordnet sind.

8. Verfahren nach Anspruch 2 und 7,
   **dadurch gekennzeichnet,**
   daß alle Verkehrsangebote (VA) einen für das gesamte Kommunikationsnetz (KN) typischen Verkehrsmix (VM) von Informationsübermittlungen unterschiedlicher Verkehrsklassen (VK) aufweisen.

9. Verfahren nach Anspruch 8,
   **dadurch gekennzeichnet,**
   daß der typische Verkehrsmix (VM) zumindest durch die Anforderungswahrscheinlichkeit jeder der Verkehrsklassen (VK) in dem gesamten Kommunikationsnetz (KN) bestimmt wird.

10. Verwendung des Verfahrens nach einem der vorhergehenden Ansprüche in einem Verfahren zum Aufbau einer Verbindung (V) zur Informationsübermittlung in einem aus Vermittlungsknoten (K) und Übertragungswegen (U) bestehenden verbindungsorientierten Kommunikationsnetz (KN),
bei dem

- für die Informationsübermittlung mehrere Routen (R(V)) geeignet sind,
- aus diesen eine optimale Route (RMIN(V)) in Abhängigkeit von den Linkgesamtbelastungsbewertungen (L) ausgewählt wird, und
- die Verbindung (V) entlang der optimalen Route (RMIN(V)) aufgebaut wird.

FIG 1

| RINF (K₁) | R (V₁ₓ) | | RK ( R₁ₓ ) |
|---|---|---|---|
| R (V₁₂) | $R_{12\text{-}1}$ ($K_1 \Rightarrow K_2$) | | RK ($R_{12\text{-}1}$) = L ($U_{12}$) |
| | $R_{12\text{-}2}$ ($K_1 \Rightarrow K_3 \Rightarrow K_4 \Rightarrow K_2$) | | RK ($R_{12\text{-}2}$) = L ($U_{13}$) + L ($U_{34}$) + L ($U_{24}$) |
| | $R_{12\text{-}3}$ ($K_1 \Rightarrow K_4 \Rightarrow K_2$) | | RK ($R_{12\text{-}3}$) = L ($U_{14}$) + L ($U_{24}$) |
| R (V₁₃) | $R_{13\text{-}1}$ ($K_1 \Rightarrow K_2 \Rightarrow K_4 \Rightarrow K_3$) | | RK ($R_{13\text{-}1}$) = L ($U_{12}$) + L ($U_{24}$) + L ($U_{34}$) |
| | $R_{13\text{-}2}$ ($K_1 \Rightarrow K_3$) | | RK ($R_{13\text{-}2}$) = L ($U_{13}$) |
| | $R_{13\text{-}3}$ ($K_1 \Rightarrow K_4 \Rightarrow K_3$) | | RK ($R_{13\text{-}3}$) = L ($U_{14}$) + L ($U_{34}$) |
| R (V₁₄) | $R_{14\text{-}1}$ ($K_1 \Rightarrow K_2 \Rightarrow K_4$) | | RK ($R_{14\text{-}1}$) = L ($U_{12}$) + L ($U_{24}$) |
| | $R_{14\text{-}2}$ ($K_1 \Rightarrow K_3 \Rightarrow K_4$) | | RK ($R_{14\text{-}2}$) = L ($U_{13}$) + L ($U_{34}$) |
| | $R_{14\text{-}3}$ ($K_1 \Rightarrow K_4$) | | RK ($R_{14\text{-}3}$) = L ($U_{14}$) |

FIG 2

**FIG 3a**

| L | AAC (U$_{ij}$ (AvCR)) | L (U$_{ij}$) |
|------|-------------|--------|
| U$_{12}$ | 20.000 kbit/s | 0,175 |
| U$_{13}$ | 25.000 kbit/s | 0,140 |
| U$_{14}$ | 5.000 kbit/s | 0,421 |
| U$_{24}$ | 30.000 kbit/s | 0,115 |
| U$_{34}$ | 25.000 kbit/s | 0,140 |

**FIG 3b**

| RK (K$_i$) | RK ( R$_{ix}$ ) |
|------|--------|
| R$_{12-1}$ | 0,175 |
| R$_{12-2}$ | 0,395 |
| R$_{12-3}$ | 0,536 |
| R$_{13-1}$ | 0,430 |
| R$_{13-2}$ | 0,140 |
| R$_{13-3}$ | 0,561 |
| R$_{14-1}$ | 0,290 |
| R$_{14-2}$ | 0,280 |
| R$_{14-3}$ | 0,421 |

RMIN → R$_{12-2}$

RMIN (V) → R$_{14-2}$

**FIG 3c**

Europäisches Patentamt

**EUROPÄISCHER RECHERCHENBERICHT**

Nummer der Anmeldung

EP 99 10 9648

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | KRISHNAN K R ET AL: "Forward-Looking Routing: A new State-Dependent Routing Scheme" PROCEEDINGS OF THE TWELFTH INTERNATIONAL TELETRAFFIC CONGRESS (ITC-12), TORINO, ITALY, 1-8 JUNE 1988, Seiten 1026-1032, XP000835673 * Seite 1026 - Seite 1030, Zeile 23 * | 1-3,10 | H04Q3/66 H04L12/56 H04L12/24 H04Q3/00 H04Q11/04 |
| Y | | 7-9 | |
| A | | 4-6 | |
| D,X | KRISHNAN K R ET AL: "Admission Control and State-Dependent Routing for Multirate Circuit-Switched Traffic" PROCEEDINGS OF THE 15TH INTERNATIONAL TELETRAFFIC CONGRESS (ITC-15), WASHINGTON DC, USA, 23-27 JUNE 1997, Seiten 1043-1054, XP002120155 * Seite 1043, Zeile 1 - Zeile 23 * * Seite 1044, Zeile 45 - Seite 1048, Zeile 15 * | 10 | |
| Y | | 7-9 | RECHERCHIERTE SACHGEBIETE (Int.Cl.7) |
| A | | 1 | H04Q H04L |
| A | EP 0 386 607 A (GTE LABORATORIES INC) 12. September 1990 (1990-09-12) * Zusammenfassung * * Seite 11, Zeile 16 - Seite 12, Zeile 45 * * Seite 13, Zeile 6 - Zeile 20 * | 1-3,10 | |
| A | OTT T J ET AL: "State Dependent Routing of Telephone Traffic and the Use of Separable Routing Schemes" PROCEEDINGS OF THE 11TH INTERNATIONAL TELETRAFFIC CONGRESS (ITC-11), KYOTO, JAPAN, 4-11 SEPTEMBER 1985, Seiten 867-871, XP000836402 | | |

Der vorliegende Recherchenbericht wurde für alle Patentansprüche erstellt

| Recherchenort | Abschlußdatum der Recherche | Prüfer |
|---|---|---|
| DEN HAAG | 25. Oktober 1999 | Vercauteren, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 10 9648

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-1999

| Im Recherchenbericht angeführtes Patentdokument | Datum der Veröffentlichung | Mitglied(er) der Patentfamilie | | Datum der Veröffentlichung |
|---|---|---|---|---|
| EP 0386607 A | 12-09-1990 | US | 4979118 A | 18-12-1990 |
| | | AU | 637550 B | 27-05-1993 |
| | | AU | 4987090 A | 13-09-1990 |
| | | CA | 2009729 A | 10-09-1990 |
| | | DE | 69029871 D | 20-03-1997 |
| | | DE | 69029871 T | 22-05-1997 |
| | | JP | 2299348 A | 11-12-1990 |

EPO FORM P0461

Für nähere Einzelheiten zu diesem Anhang : siehe Amtsblatt des Europäischen Patentamts, Nr. 12/82